# EUROPEAN PATENT SPECIFICATION

(11) **EP 4 381 241 B1**
(45) Date of publication and mention of the grant of the patent: **04.11.2026**
(21) Application number: 22751149.0
(22) Date of filing: 29.07.2022
(51) Int. Cl.: F41G 7/22, G01J 1/02, F41G 3/14, F41G 3/32, F41G 7/00, G01J 1/42, G01S 7/497

(54) **IMPROVEMENTS IN AND RELATING TO LASER DESIGNATOR PODS (LDP)**
VERBESSERUNGEN AN UND IN BEZUG AUF LASERBELEUCHTERBEHÄLTER (LDP)
AMÉLIORATIONS DANS ET ASSOCIÉES À DES CAPSULES DE MARQUEUR LASER (LDP)

(30) Priority: 06.08.2021 GB 202111359; 06.08.2021 EP 21275105
(43) Date of publication of application: 12.06.2024
(73) Proprietor: BAE SYSTEMS plc, London SW1Y 5AD (GB)
(72) Inventor: MURPHY, Ben Anthony, Preston Lancashire PR4 1AX (GB); LEES, Adrian Duncan, Preston Lancashire PR4 1AX (GB)
(74) Representative: BAE SYSTEMS plc Group IP Department
(86) International application number: PCT/GB2022/052015
(87) International publication number: WO 2023/012464

(56) References cited:
- EP-A1- 1 892 507
- CN-A- 112 729 537
- US-A- 4 155 096
- US-A- 5 251 003

## Description

### FIELD

The present invention relates to Laser Designator Pods (LDP), which are target designation tools used by ground-attack aircraft for identifying targets and guiding precision guided munitions (PGM) such as laser-guided bombs to those targets. Such pods are usually fitted to an aircraft and are used to illuminate a target by firing a laser beam at the target. When a target is so marked by a designator, the laser signal reflects off the target into the sky, where the reflections are detected by a seeker device on the PGM, which steers itself towards the centre of the reflected signal.

### BACKGROUND

It is necessary, during commissioning and possibly at a later time, to perform Electromagnetic Compatibility (EMC) Testing on the LDP and/or the aircraft to which it is fitted. As part of that testing, there is a possibility that the laser may be unintentionally fired. Similarly, there may be tests which require the laser to be intentionally fired. In either case, the firing of the laser in a test environment can be dangerous, especially to staff working in the vicinity of the test.

In the case of an unexpected and unintentional firing, personnel in the vicinity may be exposed to risk of harmful levels of laser radiation, which could, in particular, damage eyesight.

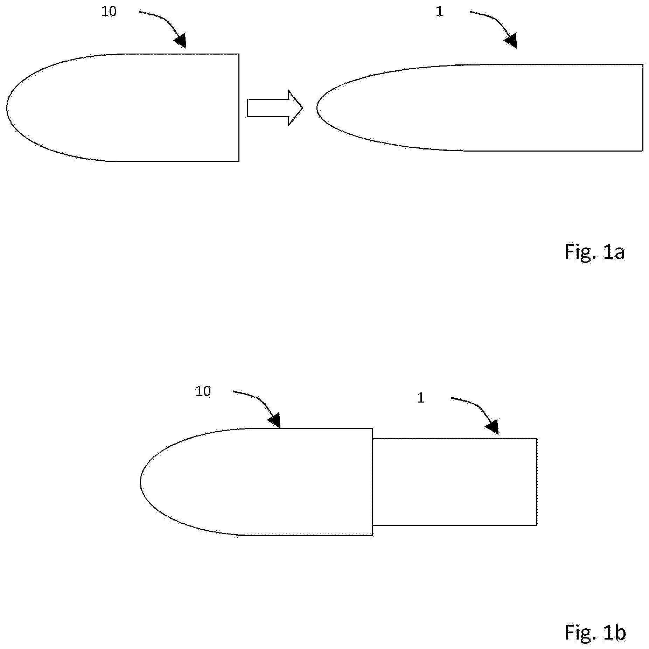

As such, when EMC or other testing is performed in connection with LDPs, special precautions are typically taken. Such precautions include the fitting of a safety hood to cover the operational portion(s) of the LDP, such that laser radiation cannot escape from the confines of the hood i.e. the hood is opaque to a range of wavelengths, for example, visible light. Such a situation is shown in Figures 1a and 1b.

Figure 1a shows an LDP 1 and safety hood 10. Before testing commences, the safety hood 10 is fitted to the LDP 1, as shown. Once the hood 10 is fitted to the LDP 1, as shown in Figure 1b, any laser emissions cannot escape the safety hood, thereby protecting any personnel in the vicinity. The fitting of the safety hood 10 may involve securely fastening it in place using bolts, screws, straps or other fastenings. Such fastenings may be arranged to couple with complementary fastenings on the LDP itself.

However, a problem with this arrangement is that once the hood 10 is fitted to the LDP 1, it is not possible to discern whether the laser has fired within the confines of the hood. It is desirable to know if this has happened as it may indicate a degree of malfunction which requires rectification.

A prior art technique employed to address this issue involves the use of so-called Laser Detection Paper, such as that produced by Zeiss^{®}, which is fitted to the hood 10 before fitting. Paper of this sort is sensitized and records a mark in the event of incident laser radiation. In order to detect a firing, the hood must be removed, and the paper examined.

However, there are issues associated with this approach which render it non-optimal. The paper itself is believed to be no-longer available and so it is difficult or impossible to obtain supplies. Even if available, the paper is only useful for recording relatively long bursts of laser radiation in the range of 10-20secs. As such, if the laser fires for less than 10secs, such a firing may not be detected by the paper. Further, such a technique is unable to detect the wavelength of the fired laser.

A further approach, adopted by Leonardo^{®}, involves the use of fibre optics which are connected to the hood 10. However, trials have suggested that this approach is not always able to detect a firing at certain wavelengths and/or angles of incidence. This means that it may not be possible to successfully register every unintentional firing of the laser in this situation.

It is an aim of embodiments of the present invention to address shortcomings in the prior art, whether mentioned herein or not.

### SUMMARY

According to an aspect of the present invention, there is provided a Laser Designator Pod (LDP) comprising a protective system, the LDP protective system comprising a protective hood fitted over the LDP; a laser detector arranged within the protective hood to generate a signal when exposed to laser radiation within a predefined range of wavelengths corresponding with a range of wavelengths emitted by a laser in the LDP; and, a computing device to record the generated signal. The system is configured to detect a plurality of predefined wavelength ranges, each of the plurality of predefined wavelength ranges corresponding to an operational mode of the LDP, each operational mode comprising a discreet range of predefined wavelengths. The system is configured to indicate whether the laser of the LDP is operating at the correct desired wavelength. Preferably, the system is suitable for fitting over the LDP. Preferably, the computing device is a Rasberry Pi computing device.

Advantageously, the system provides protection to users during testing of the LDP from harmful laser radiation and provides an indication that the laser within the LDP has correctly fired. Further, the system provides an indication that the laser has correctly fired within a predefined range of wavelengths, that is to say, that the system provides a positive confirmation that the laser of the LDP is operating at the correct desired wavelength. The present inventors have found that the system provides a small, low complexity and low cost solution to testing LDP's that allows the LDP to be tested in-situ without the need for specialist equipment in RF testing chambers.

In an arrangement, the laser detector and the computing device are physically separated, with the laser detector being arranged for use within the hood and the computing device being arranged for use outside the hood.

Advantageously, this allows the computing device to be located some distance away from the laser detector, for example in a less confined space or an office environment.

In an arrangement, the laser detector and the computing device are electrically connected by means of a cable. Advantageously, connection by a cable may assist in avoiding additional possible sources of EM interference. Preferably, the laser detector and the computing device are electrically connected by an EMC shielded cable.

In an arrangement, power is provided to the system by means of a portable battery pack, a mains to DC convertor or Power over Ethernet, PoE.

Advantageously, the battery pack allows the system to be conveniently powered by conventional mains electricity or, where mains power is unavailable, by low power sources such as DC power or PoE which may be more readily accessible in an aircraft maintenance environment.

In an arrangement, the laser detector is provided with an optical emitter operable at a wavelength within the predefined range of wavelengths and arranged to function in a self-test mode.

In an arrangement, the laser detector is provided with a further optical emitter arranged to emit light at a wavelength outside the predefined range of wavelengths to indicate a power-on status of the system.

The predefined range of wavelengths of the first aspect correspond with a range of wavelengths emitted by a laser in the LDP.

In an arrangement, the system of the first aspect is arranged to indicate that the laser in the LDP (1) has fired and that the laser is operating within the predefined range of wavelengths.

The system is configured to detect a plurality of predefined wavelength ranges, each of the plurality of predefined wavelength ranges corresponding to an operational mode of the LDP, each operational mode comprising a discreet range of predefined wavelengths.

Advantageously, this arrangement allows the system to detect if the LDP is operating in the correct operational mode.

In an arrangement, the predefined wavelength ranges correspond to three operational modes of the LDP, the operational modes comprising:
a training mode comprising a predefined wavelength in the range of from 1200 to 1700nm;
a combat mode comprising a predefined wavelength in the range of from 800 to 1200nm;
and a marker mode comprising a predefined wavelength in the range of from 500 to 1100nm.

Advantageously, this arrangement allows the system to better detect if the LDP is operating in the correct operational mode.

In an arrangement, the system is arranged for communication with a further computing device via a wired or wireless connection wherein the further computing device is arranged to execute a program to perform a test procedure on the LDP.

According to a second aspect of the present invention, there is provided a method of detecting laser fire within a protective hood fitted over a Laser Designator Pod, LDP, using the system according to the first aspect and comprising the steps: providing the laser detector within the hood; performing a test on the LDP; detecting the presence of a fired laser within a predefined range of wavelengths; wherein the predefined range of wavelengths correspond with a range of wavelengths emitted by a laser in the LDP; generating a signal in response to the laser detector being exposed to laser radiation within the predefined range of wavelengths; and recording the generated signal using a computing device; and indicating whether the laser of the LDP (1) is operating at the correct desired wavelength.

The test comprises firing the laser within the LDP and detecting, via the LDP protective system, if the LDP is operating correctly within the predefined range of wavelengths. Advantageously, the system provides protection to users during testing of the LDP from harmful laser radiation and provides an indication that the laser within the LDP has correctly fired. Further, the system provides an indication that the laser has correctly fired within a predefined range of wavelengths, that is to say, that the system provides a positive confirmation that the laser of the LDP is operating at the correct desired wavelength

According to an aspect of the present invention, there is provided a device for detecting laser fire within a protective hood fitted over a Laser Designator Pod, LDP, comprising: a laser detector arranged within the hood to generate a signal when exposed to laser radiation within a predefined range of wavelengths; a computing device to record the signal, thereby indicating that a laser in the LDP has fired.

In an embodiment, the laser detector and the computing device are physically separated, with the laser device being arranged for use within the hood and the computing device being arranged for use outside the hood.

In an embodiment, the laser detector and the computing device are electrically connected by means of a cable.

In an embodiment, power is provided to the device by means of a portable battery pack, a mains to DC convertor or Power over Ethernet, PoE.

In an embodiment, the predefined range of wavelengths is substantially aligned with a plurality of operational modes of the LDP.

In an embodiment, the range is substantially 500nm to 1700nm.

In an embodiment, the laser detector is provided with an optical emitter operable at a wavelength within the predetermined range of wavelengths and arranged to function in a self-test mode.

In an embodiment, the laser detector is provided with a further optical emitter arranged to emit light at a wavelength outside the predetermined range of wavelengths to indicate a power-on status of the device.

In an embodiment, the device is arranged for communication with a further computing device arranged to execute a program to perform a test procedure on the LDP.

According to another aspect of the present invention, there is provided a method of detecting laser fire within a protective hood fitted over a Laser Designator Pod, LDP, using the device of any preceding claim and comprising the steps: providing the laser detector within the hood; performing a test on the LDP; monitoring for the presence of a fired laser.

### BRIEF DESCRIPTION OF THE FIGURES

Embodiments of the invention will now be described by way of example only with reference to the figures, in which:
Figures 1a and 1b show a prior art arrangement including an LDP and safety hood;
Figure 2 shows a system according to an embodiment of the invention;
Figure 3 shows a circuit schematic for the system of Figure 2, according to an embodiment of the present invention; and
Figure 4 shows a flowchart of a method according to an embodiment of the present invention.

### DETAILED DESCRIPTION

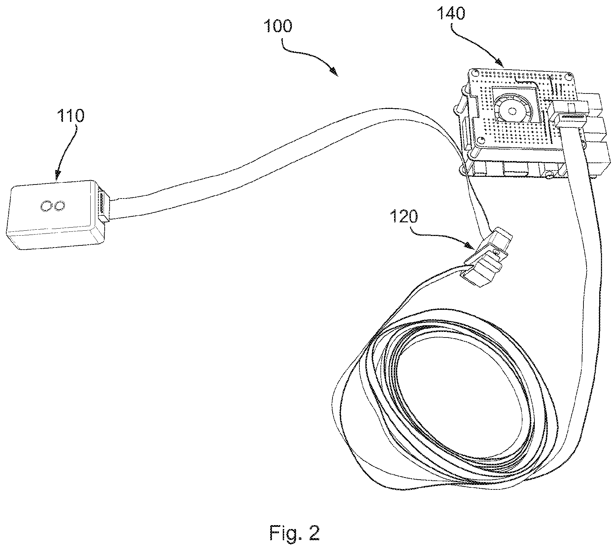

Figure 2 shows a system 100 according to an embodiment of the present invention. The system 100 is arranged to be partially installed inside the hood 10, and to communicate with an external computer to report any instances of laser firing within the hood.

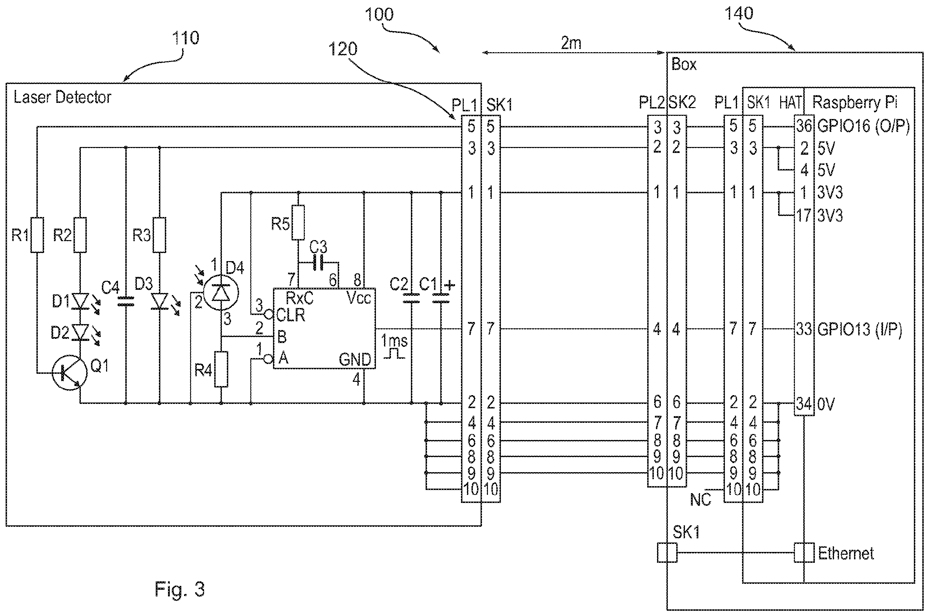

Figure 3 shows a circuit schematic of various features of the system 100 and both Figures 2 and 3 are referred to in the following description.

In more detail, the system 100 comprises a laser detector 110 which is arranged within the interior of the hood 10. The laser detector comprises an optical sensor D4, which is sensitive to laser radiation at a wavelength of transmission. Upon receipt of laser radiation at optical sensor D4, a voltage is presented at an input of integrated circuit U1 which is operable to create a 1ms pulse which is transmitted via means of a cable 120 to a computing device 140, which is located outside the hood 10.

U1 is a 'monostable multivibrator' (part number 74LVC1G123DP). When powered from a supply between 3.0V & 3.6V the shortest pulse that U1 is guaranteed to detect (across R4) is 3ns. The duration of the electrical pulse generated by D4 across R4 is dependent on:
i. The power of the light incident on the detector (More power = shorter light pulse required to trigger U1)
ii. The duration of the incident light pulse
iii. The wavelength of the incident light pulse (Shorter wavelength = longer light pulse required to trigger U1)
iv. Circuit capacitance (higher capacitance = longer light pulse required to trigger U1)
v. The resistance of R4 (Higher resistance = shorter light pulse required to trigger U1)

The optical detector D4 is a photodiode which is sensitive to wavelengths in the range of 500nm to 1700nm. If light from the laser, within this range of wavelengths, falls on the detector D4, then this causes a current to flow through resistor R4. This creates a voltage that is sensed by pin 2 of U1. If this voltage is greater than about 2V then U1 will output a single 3V3 pulse with a duration set by resistor R5 & capacitor C3 (approximately 1ms). This pulse is used to set an interrupt to the computing device 140, which is described later.

The light falling on D4 must be removed, to a level where the voltage on U1 pin 2 is less than about 1V, and then re-applied in order to cause U1 to output another pulse. Thus, the computing device 140 is interrupted each time a new light pulse is detected. The software running on an external computer (not shown) connected to the computing device 140 can then measure the time between successive pulses to distinguish between the Marker and either the Combat or Training Lasers, which represent different operational modes of the LDP. If the Pulse Repetition Frequency, PRF, of the combat & training lasers are sufficiently different from each other, then the computing device 140 will be able to distinguish between them.

The laser detector 110 is connected, through the body of the hood 10, via a length of electrical cable 120, such as multi-connector ribbon cable, to the computing device 140, such as a Raspberry Pi. The computing device receives the 1ms pulse generated by the laser detector 110 at a General Purpose Input/Output (GPIO) pin. Receipt of this pulse triggers a hardware interrupt which can be registered and processed by a further external computing device (not shown) which is connected to the computing device 140. The connection from the computing device 140 to the further external computer device may be effected by a further wired connection, such as Ethernet, fibre optic, or, where possible, via a wireless connection, such as Wi-Fi.

Power may be provided to the system 100 via a portable battery pack, a mains to DC convertor or Power over Ethernet (PoE).

The further external computer device, which is arranged to run software associated with the ongoing testing of the LDP, is therefore alerted to the firing of the laser in the LDP, even though there is no physical access to the interior of the hood 10. Such a firing may be intentional or not, but the fact that it may be reliably detected and recorded allows an operator to take any corrective action which may be required. The corrective action may involve further tests and/or remedial action.

When the computing device, 140, GPIO output 16 is set high, then transistor Q1 will turn on and cause Infra-Red IR emitters D1 & D2 to illuminate. The light from D1 & D2 will then illuminate D4, simulating the laser light produced by the LDP. This will allow the computing device 140 software to perform a built-in test. D1 & D2 emit light with a wavelength between 900nm & 1000nm. These devices are eye safe and so there is no risk to personnel if these are used outside the confines of the hood 10.

D3 is a 'Power-On' LED that emits in the visible spectrum. A blue LED is preferably used so that its spectrum (400nm to 600nm) is not detected by D4 and so does not interfere with the normal operation of the system 100. In one test set up, a visible-light camera which forms a part of the LDP is able to see the blue light, thus confirming power is being supplied to system 100.

In one embodiment, the laser detector 110 is fitted inside the hood 10 at the time of manufacture of the hood so that it is a truly integral part of the hood. Alternatively, the laser detector 110 may be retro-fitted to an existing hood 10.

The exact location of the laser detector 110 inside the hood is relatively unimportant, since the laser radiation typically reflects around and effectively illuminates the entire interior. As such, the laser detector can be located at any convenient location. Some trial and error may be required to find the optimum position. However, it is not necessary for the laser to be directly incident on the detector.

Since the LDP, when undergoing EMC testing, is located in a very delicate environment, from an EMC point of view, care is required in the design and manufacture of the system 100. As such, screened and wired connections are preferred over wireless links and battery power is preferred over mains power. Such steps can assist in avoiding additional possible sources of EM interference.

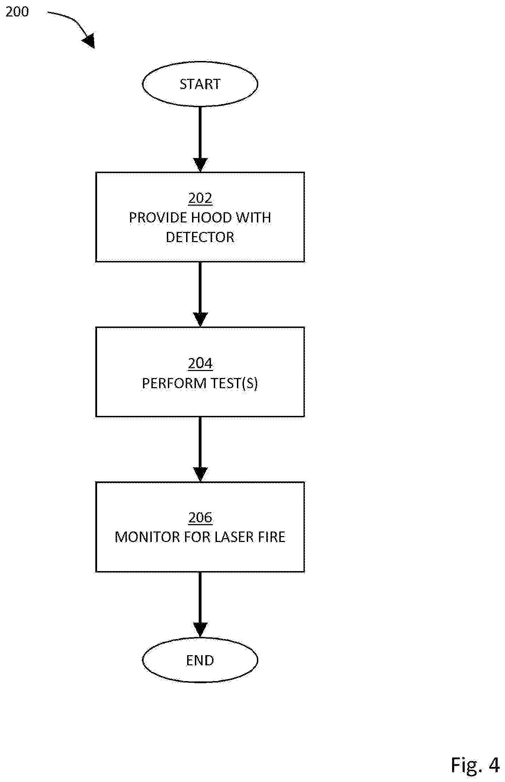

Figure 4 shows a flowchart depicting the steps of a method 200 according to an embodiment of the present invention. At 202, a hood 10 is provided, which comprises a laser detector 110. The laser detector may be integrally formed with the hood or it may be retro-fitted at a later time.

At 204, the EMC test is performed on the LDP or aircraft. At 206, the computing device 140 continually monitors the laser detector to determine if a pulse signal is generated, which is indicative of a fired laser within the hood. As a part of the monitoring process, an operator is able to determine whether the test should be completed or terminated and whether any remedial action is required.

By means of an embodiment 100 as set out above, it is possible to monitor an interior space of a protective hood 10 fitted to an LDP 1 when undergoing testing, especially EMC testing. Such an arrangement permits reliable monitoring of laser activity, whether intentional or not, thereby ensuring that the LDP is operating within permitted limits.

## Claims

1. A Laser Designator Pod, LDP, (1) comprising a protective system, the LDP protective system comprising:
a protective hood (10) fitted over the LDP (1);
a laser detector (110) arranged within the protective hood (10) to generate a signal when exposed to laser radiation within a predefined range of wavelengths corresponding with a range of wavelengths emitted by a laser in the LDP (1); and,
a computing device (140) to record the generated signal,
wherein the system is configured to:
detect a plurality of predefined wavelength ranges, each of the plurality of predefined wavelength ranges corresponding to an operational mode of the LDP, each operational mode comprising a discrete range of predefined wavelengths; and
indicate whether the laser of the LDP is operating at the correct desired wavelength.

2. The LDP of claim 1 wherein the laser detector (110) and the computing device (140) are physically separated, with the laser detector (110) being arranged for use within the protective hood (10) and the computing device (140) being arranged for use outside the protective hood (10).

3. The LDP of claim 2 wherein the laser detector (110) and the computing device (140) are electrically connected by means of a cable (120).

4. The LDP of any preceding claim wherein power is provided to the system by means of a portable battery pack, a mains to DC convertor or Power over Ethernet, PoE.

5. The LDP of any preceding claim wherein the laser detector (110) is provided with an optical emitter (D1, D2) operable at a wavelength within the predefined range of wavelengths and arranged to function in a self-test mode.

6. The LDP of claim 5 wherein the laser detector (110) is provided with a further optical emitter (D3) arranged to emit light at a wavelength outside the predefined range of wavelengths to indicate a power-on status of the system.

7. The LDP (1) of any preceding claim wherein the predefined wavelength ranges correspond to three operational modes of the LDP, the operational modes comprising:
a training mode comprising a predefined wavelength in the range of from 1200 to 1700nm;
a combat mode comprising a predefined wavelength in the range of from 800 to 1200nm;
and a marker mode comprising a predefined wavelength in the range of from 500 to 1100nm.

8. The LDP (1) according to any preceding claim wherein the system is arranged for communication with a further computing device via a wired or wireless connection wherein the further computing device is arranged to execute a program to perform a test procedure on the LDP (1).

9. A method (200) of detecting laser fire within a protective hood (10) fitted over a Laser Designator Pod (1), LDP, using the LDP of any preceding claim, the method comprising the steps of:
providing the laser detector (110) within the protective hood (202);
performing a test on the LDP (204);
detecting the presence of a fired laser (206) within a predefined range of wavelengths; wherein the predefined range of wavelengths correspond with a range of wavelengths emitted by a laser in the LDP (1);
generating a signal in response to the laser detector (202) being exposed to laser radiation within the predefined range of wavelengths;
recording the generated signal using a computing device (140); and indicating whether the laser of the LDP (1) is operating at the correct desired wavelength.

## Patentansprüche

1. Lasermarkierergehäuse, LDP, (1), umfassend ein Schutzsystem, das LDP-Schutzsystem umfassend:
eine Schutzhaube (10), die über dem LDP (1) angebracht ist;
einen Laserdetektor (110), der innerhalb der Schutzhaube (10) eingerichtet ist, um ein Signal zu erzeugen, wenn er Laserstrahlung innerhalb eines vordefinierten Bereichs von Wellenlängen ausgesetzt ist, der einem Bereich von Wellenlängen entspricht, die durch einen Laser in dem LDP (1) emittiert werden; und,
eine Rechenvorrichtung (140), um das erzeugte Signal aufzuzeichnen, wobei das System konfiguriert ist zum:
Detektieren einer Vielzahl von vordefinierten Wellenlängenbereichen, wobei jeder der Vielzahl von vordefinierten Wellenlängenbereichen einem Operationsmodus des LDP entspricht, jeder Operationsmodus umfassend einen diskreten Bereich von vordefinierten Wellenlängen; und
Anzeigen, ob der Laser des LDP bei der korrekten gewünschten Wellenlänge operiert.

2. LDP nach Anspruch 1, wobei der Laserdetektor (110) und die Rechenvorrichtung (140) physisch getrennt sind, wobei der Laserdetektor (110) zur Verwendung innerhalb der Schutzhaube (10) eingerichtet ist und die Rechenvorrichtung (140) zur Verwendung außerhalb der Schutzhaube (10) eingerichtet ist.

3. LDP nach Anspruch 2, wobei der Laserdetektor (110) und die Rechenvorrichtung (140) mittels eines Kabels (120) elektrisch verbunden sind.

4. LDP nach einem der vorstehenden Ansprüche, wobei Leistung an das System mittels eines tragbaren Batteriepacks, eines Netz-Gleichstrom-Wandlers oder Power-over-Ethernet, PoE, bereitgestellt wird.

5. LDP nach einem der vorstehenden Ansprüche, wobei der Laserdetektor (110) mit einem optischen Emitter (D1, D2) versehen ist, der bei einer Wellenlänge innerhalb des vordefinierten Bereichs von Wellenlängen operierbar ist und eingerichtet ist, um in einem Selbsttestmodus zu funktionieren.

6. LDP nach Anspruch 5, wobei der Laserdetektor (110) mit einem weiteren optischen Emitter (D3) versehen ist, der eingerichtet ist, um Licht bei einer Wellenlänge außerhalb des vordefinierten Bereichs von Wellenlängen zu emittieren, um einen Einschaltzustand des Systems anzuzeigen.

7. LDP (1) nach einem der vorstehenden Ansprüche, wobei die vordefinierten Wellenlängenbereiche drei Operationsmodi des LDP entsprechen, die Operationsmodi umfassend:
einen Trainingsmodus, umfassend eine vordefinierte Wellenlänge in dem Bereich von 1200 bis 1700 nm;
einen Kampfmodus, umfassend eine vordefinierte Wellenlänge in dem Bereich von 800 bis 1200 nm;
und einen Markermodus, umfassend eine vordefinierte Wellenlänge in dem Bereich von 500 bis 1100 nm.

8. LDP (1) nach einem der vorstehenden Ansprüche, wobei das System für eine Kommunikation mit einer weiteren Rechenvorrichtung über eine drahtgebundene oder drahtlose Verbindung eingerichtet ist, wobei die weitere Rechenvorrichtung eingerichtet ist, um ein Programm auszuführen, um eine Testprozedur an dem LDP (1) durchzuführen.

9. Verfahren (200) zum Detektieren von Laserfeuer innerhalb einer Schutzhaube (10), die über einem Lasermarkierergehäuse (1), LDP, angebracht ist, unter Verwendung des LDP nach einem der vorstehenden Ansprüche, das Verfahren umfassend die Schritte:
Bereitstellen des Laserdetektors (110) innerhalb der Schutzhaube (202);
Durchführen eines Tests an dem LDP (204);
Detektieren des Vorhandenseins eines abgefeuerten Lasers (206) innerhalb eines vordefinierten Bereichs von Wellenlängen; wobei der vordefinierte Bereich von Wellenlängen einem Bereich von Wellenlängen entspricht, die durch einen Laser in dem LDP (1) emittiert werden;
Erzeugen eines Signals als Reaktion darauf, dass der Laserdetektor (202) Laserstrahlung innerhalb des vordefinierten Bereichs von Wellenlängen ausgesetzt ist;
Aufzeichnen des erzeugten Signals unter Verwendung einer Rechenvorrichtung (140); und Anzeigen, ob der Laser des LDP (1) bei der korrekten gewünschten Wellenlänge operiert.

## Revendications

1. Nacelle de désignation laser, LDP, (1) comprenant un système de protection, le
système de protection de LDP comprenant :
un capot de protection (10) monté sur la LDP (1) ;
un détecteur laser (110) agencé à l'intérieur du capot de protection (10) destiné à générer un signal lorsqu'il est exposé à un rayonnement laser dans une plage prédéfinie de longueurs d'onde correspondant à une plage de longueurs d'onde émises par un laser dans la LDP (1) ; et,
un dispositif informatique (140) destiné à enregistrer le signal généré, dans laquelle le système est configuré pour :
détecter une pluralité de plages de longueurs d'onde prédéfinies, chacune de la pluralité de plages de longueurs d'onde prédéfinies correspondant à un mode de fonctionnement de la LDP, chaque mode de fonctionnement comprenant une plage discrète de longueurs d'onde prédéfinies ; et
indiquer si le laser de la LDP fonctionne à la longueur d'onde correcte souhaitée.

2. LDP selon la revendication 1, dans laquelle le détecteur laser (110) et le dispositif informatique (140) sont physiquement séparés, le détecteur laser (110) étant agencé pour une utilisation à l'intérieur du capot de protection (10) et le dispositif informatique (140) étant agencé pour une utilisation à l'extérieur du capot de protection (10).

3. LDP selon la revendication 2, dans laquelle le détecteur laser (110) et le dispositif informatique (140) sont connectés électriquement au moyen d'un câble (120).

4. LDP selon l'une quelconque revendication précédente, dans laquelle l'électricité est fournie au système au moyen d'un bloc-batterie portable, d'un convertisseur secteur-CC ou d'une alimentation électrique par câble Ethernet, PoE.

5. LDP selon l'une quelconque revendication précédente, dans laquelle le détecteur laser (110) est pourvu d'un émetteur optique (D1, D2) pouvant fonctionner à une longueur d'onde dans la plage prédéfinie de longueurs d'onde et agencé pour fonctionner en mode d'autotest.

6. LDP selon la revendication 5, dans laquelle le détecteur laser (110) est pourvu d'un autre émetteur optique (D3) agencé pour émettre de la lumière à une longueur d'onde en dehors de la plage prédéfinie de longueurs d'onde afin d'indiquer un état de mise sous tension du système.

7. LDP (1) selon l'une quelconque revendication précédente, dans laquelle les plages de longueurs d'onde prédéfinies correspondent à trois modes de fonctionnement de la LDP, les modes de fonctionnement comprenant :
un mode entraînement comprenant une longueur d'onde prédéfinie dans la plage allant de 1200 à 1700 nm ;
un mode combat comprenant une longueur d'onde prédéfinie dans la plage allant de 800 à 1200 nm ;
et un mode marqueur comprenant une longueur d'onde prédéfinie dans la plage allant de 500 à 1100 nm.

8. LDP (1) selon l'une quelconque revendication précédente, dans laquelle le système est agencé pour une communication avec un autre dispositif informatique par l'intermédiaire d'une connexion câblée ou sans fil, dans laquelle l'autre dispositif informatique est agencé pour exécuter un programme afin d'effectuer une procédure de test sur la LDP (1).

9. Procédé (200) de détection d'un tir laser à l'intérieur d'un capot de protection (10) monté sur une nacelle de désignation laser (1), LDP, à l'aide de la LDP selon l'une quelconque revendication précédente, le procédé comprenant les étapes consistant à :
fournir le détecteur laser (110) à l'intérieur du capot de protection (202) ;
effectuer un test sur la LDP (204) ;
détecter la présence d'un laser tiré (206) dans une plage prédéfinie de longueurs d'onde ; dans lequel la plage prédéfinie de longueurs d'onde correspond à une plage de longueurs d'onde émises par un laser dans la LDP (1) ;
générer un signal en réponse à l'exposition du détecteur laser (202) à un rayonnement laser dans la plage prédéfinie de longueurs d'onde ;
enregistrer le signal généré à l'aide d'un dispositif informatique (140) ; et indiquer si le laser de la LDP (1) fonctionne à la longueur d'onde correcte souhaitée.
